# EUROPÄISCHE PATENTANMELDUNG

(11) **EP 0 590 683 A1**
(43) Veröffentlichungstag der Anmeldung: **06.04.1994**
(21) Anmeldenummer: 93115919.8
(22) Anmeldetag: 01.10.1993
(51) Int. Cl.: B60C 27/14

(54) **Verfahren und Vorrichtung zum Aufziehen eines Gleitschutzelements, insbesonder einer Gleitschutzkette auf ein Kraftfahrzeugrad**

(30) Priorität: 01.10.1992 DE 4233080
(71) Anmelder: Reiber, Konrad, 86860 Jengen (DE)
(72) Erfinder: Reiber, Konrad, 86860 Jengen (DE)
(74) Vertreter: Herrmann-Trentepohl, Werner, Dipl.-Ing.

(57) **Zusammenfassung**

Die vorliegende Erfindung betrifft ein Verfahren und eine Vorrichtung zum selbsttätigen Aufziehen eines Gleitschutzelements auf ein Fahrzeugrad. Zum Aufziehen des Gleitschutzelements wird das Gehäuse (3) außerhalb des Fahrzeugs im Bereich eines Fahrzeugrades angeordnet, durch Verfahren des Fahrzeuges mit einem Fahrzeugrad in Anschlag gebracht, so daß das Gehäuse durch ein weiteres Verfahren des Fahrzeuges unter gleichzeitigem Aufziehen der Kette verschoben wird, wobei nach einer Umdrehung des Rades ein gehäuseseitig lösbar angeordnetes Schloßoberteil durch ein Führungselement in Verschlußstellung mit einem Schloßunterteil gebracht wird.

Vorrichtungsseitig ist hierbei ein Gehäuse mit Stütz- und Haltelementen vorgesehen, welches im Bereich einer Kettenauszugsöffnung ein ausklappbares Anschlagselement (7) sowie ein fest mit dem Gehäuse verbundenes Führungselement (13) umfaßt, welches ein Kettenschloßoberteil nach dem Ausziehen der Gleitschutzkette aus dem Gehäuse in ein Schloßunterteil führt und mit diesem verrastet.

## Beschreibung

Die Erfindung betrifft ein verfahren bzw. eine Vorrichtung zum Aufziehen eines Gleitschutzelements, insbesondere einer Gleitschutzkette, gemäß dem Oberbegriff des Patentanspruches 1 bzw. des Patentanspruches 8.

Trotz einer fortlaufenden Verfeinerung der Antriebsmechanismen von Fahrzeugen, wie z. B. automatisch zuschaltbaren Sperrdifferentialen und der zunehmende Einsatz von Allradantriebstechniken, ist ein sicheres Fahren, insbesondere auf stark verschneiten Gefällstrecken, nur unter der Verwendung von Gleitschutzketten, insbesondere Schneeketten, möglich. Die Verwendung derartiger Gleitschutzketten setzt jedoch eine umständliche manuelle Montage voraus. Hierbei ist es insbesondere schwierig, die seitlichen Führungsketten einer Gleitschutzkette an der Innenseite des Rades anzubringen. Man ist daher vielfach dazu übergegangen, die seitliche Führungskette an der Innenseite und z. T. auch an der Außenseite des Rades durch einen flexiblen Bügel zu ersetzen und das Spannen der Kette mittels einer an der Radaußenseite vorgesehenen Spannkette zu ermöglichen. Trotz dieser etwas montagefreundlicheren Ausführung, blieb das Aufziehen von Gleitschutzketten immernoch so umständlich, daß viele Fahrzeugführer ihren Einsatz scheuten.

Man ist daher in jüngerer Zeit dazu übergegangen, Vorrichtungen zum automatischen Aufziehen von Gleitschutzketten auf Fahrzeugräder zu entwickeln. Eine derartige Vorrichtung ist bereits aus dem Dokument AT-A-366628 bekannt, welche ein selbsttätiges Aufziehen von Schneeketten auf ein Kraftfahrzeugrad ermöglicht. Diese fest mit dem Fahrzeug verbundene Vorrichtung ist jedoch relativ störanfällig und erfordert einen hohen Platzbedarf, so daß die Vorrichtung kaum in einem PKW untergebracht werden kann.

Aus dem Dokument EP 0 329 134 A2 ist eine weitere Vorrichtung zum automatischen Aufziehen von Gleitschutzketten auf ein Fahrzeugrad bekannt, welche ebenfalls in das Fahrzeug intregriert ist. Diese Vorrichtung ist wesentlich platzsparender gestaltet, so daß sie z.B. in den Fahrzeugrahmen insbesondere von Fahrzeugen der Oberklasse einbaubar ist. Derartige Vorrichtungen sind jedoch relativ aufwendig und erfordern Antriebsaggregate und verschiedene elektrische und/oder elektronische Steuerelemente. Damit sind diese Vorrichtungen teuer; ein Einbau bei PKW der Mittel- und Unterklasse erscheint daher aufgrund des Preisdrucks in dieser Klasse als nicht durchsetzbar.

Es wäre daher wünschenswert, eine einfache und billige Vorrichtung zu schaffen, mit deren Hilfe ein zuverlässiges selbsttätiges Aufziehen von Gleitschutzketten auf Fahrzeugräder aller Arten von Fahrzeugen möglich ist.

Aufgabe der vorliegenden Erfindung ist es, ein Verfahren und eine Vorrichtung zum selbsttätigen Aufziehen einer Gleitschutzkette anzugeben, welche einfach, kostengünstig und zuverlässig sind. Eine weitere Aufgabe der Vorrichtung besteht darin, daß die Vorrichtung ohne weiteres transportierbar und bei verschiedenen Fahrzeugrädern gleichermaßen anwendbar ist.

Die verfahrensseitige Aufgabe wird durch die im kennzeichnenden Teil des Patentanspruches 1 enthaltenen Merkmale, die vorrichtungsseitige Aufgabe wird durch die im kennzeichnenden Teil des Anspruches 9 enthaltenen Merkmale gelöst, wobei jeweils zweckmäßige Weiterbildungen des Verfahrens bzw. der Vorrichtung durch die in den Unteransprüchen angegebenen Merkmale gekennzeichnet sind.

Zum selbsttätigen Aufziehen der Gleitschutzkette wird zunächst ein Gehäuse außerhalb des Fahrzeuges mit ausgeklappten Gleitkufen derart angeordnet, daß die Kettenauszugsöffnung in Richtung des Fahrzeugreifens weist. Ferner wird das Schloßunterteil in eine an der Kettenauszugsöffnung des Gehäuses randseitig vorgesehene Aufnahme gesteckt, so daß der Auffahrbügel von der Kettenauszugsöffnung weg in Richtung zum Fahrzeugrad weist. Das Gehäuse wird nun zusätzlich mittels beispielsweise einer Kette an der Unterseite des Fahrzeuges eingehängt, so daß die Gleitkufen an der der Kettenauszugsöffnung gegenüberliegenden Gehäuseschmalseite um wenigstens 10 mm angehoben werden. Sodann wird das Fahrzeug in Richtung der Kettenauszugsöffnung verfahren, wobei sich der Auffahrbügel über die Reifenwand schiebt bis der Fahrzeugreifen an dem ausgeklappten Anschlagselement, insbesondere an der Anschlagsrolle, anschlägt. Wird das Fahrzeug weiter in Richtung des Gehäuses verfahren, so wird dieses durch den Fahrzeugreifen in Fahrtrichtung des Fahrzeuges verschoben. Gleichzeitig wird die Kette mittels des reibschlüssig gehaltenen Auffahrbügels zusammen mit dem hier angebrachten Schloßunterteil aus dem Gehäuse herausgezogen und auf den Reifen aufgezogen. Nach einer Umdrehung des Rades wird das am Kettenende angeordnete Schloßoberteil, welches auf einem Gleitbock an der der Öffnungsseite gegenüberliegenden rückwärtigen Gehäuseseite angeordnet ist, entlang einer Führungsschiene bis zur Gehäuseöffnung nach vorne geschleppt, im weiteren Verlauf aus seiner Halterung gezogen und an einem speziell ausgebildeten Führungsglied vorbeigeführt, welches dazu dient das Schloßoberteil in das Schloßunterteil einzuführen und somit einen sicheren Verschluß zu gewährleisten.

Versuche haben ergeben, daß eine maximale Störunanfälligkeit des beschriebenen Verfahrens insbesondere dann erzielbar ist, wenn das Gehäuse gegen die bremsende Einwirkung von Reibungskräften verschoben wird. Dies gewährleistet, daß das Gehäuses während des gesamten Verschiebungsvorganges mit seiner Andruckrolle am Fahrzeugrad anliegt.Desweiteren hat es sich gezeigt, daß es vorteilhaft ist, wenn die Kette während des Herausziehens auf gleichmäßigem Gegenzug gehalten wird.

Um zu verhindern, daß bei aufgezogener, verriegelter Kette während des Fahrens der Auffahrbügel radial vom Reifen weg nach außen klappt, sind sowohl am Schloßunterteil als auch am Haltebügel entsprechende Anschlagselemente vorgesehen, so daß der Auffahrbügel in einer tangentialen Position gehalten wird.

Nach Maßgabe der Erfindung umfaßt die Vorrichtung zum selbsttätigen Aufziehen eines Gleitschutzelements ein Gehäuse, bei dem Stütz- und Halteelemente vorgesehen sind, welche vorzugsweise aus- und einklappbar ausgebildet sind. Ferner weist das Gehäuse eine stirnseitige Gehäuseöffnung zum Herausziehen der Kette auf. Im Bereich dieser Kettenauszugsöffnung ist ein ausklappbares Anschlagselement angelenkt. Darüberhinaus ist im Bereich der Kettenauszugsöffnung ein Führungselement angelenkt, welches ein Schloßoberteil nach dem Ausziehen der Gleitschutzkette aus dem Gehäuse in ein Schloßunterteil führt und mit diesem verrastet.

Das Gehäuse umfaßt einen rechteckförmigen Kasten mit einem Deckel, wobei der Deckel um eine Achse parallel zu einer ersten schmalen Stirnseite aufklappbar ist. Im Bereich einer zweiten schmalen Stirnseite ist die oben beschriebene Öffnung zum Ausziehen der Kette angeordnet. In einer vorteilhaften Ausgestaltung der Erfindung kann zum Verschluß der Kettenauszugsöffnung eine aufsteckbare Kappe, welche beispielsweise aus flexiblem Kunststoff gebildet ist, vorgesehen sein.

In einer weiteren Ausgestaltungsform sind wenigstens zwei Stützelemente vorgesehen, welche in Form von geneigten Gleitkufen ausgebildet und im Bereich der bodenseitigen Gehäuselängskanten angeordnet sind. Bei ausgeklappten Gleitkufen ergibt sich mithin eine Schrägstellung des Gehäuses, wobei die Kettenauszugsöffnung des Gehäuses nach oben weist. Die Stützelemente dienen einerseits zum Abstützen des Gehäuses und andererseits als Gleitkufen zum Verschieben der Vorrichtung. Es sind als Stützelemente daher auch Rollen geeignet, welche vorzugsweise reibungsgebremst ausgebildet sind.

Das im Bereich der Kettenauszugsöffnung vorgesehene Anschlagselement dient zur Aufnahme einer horizontal angreifenden Druckkraft, welche zur Verschiebung des Gehäuses beim Aufziehvorgang der Kette beiträgt. Die Druckkraft wird durch ein gegen das Gehäuse rollendes Fahrzeugrad aufgebracht. Um die bei anliegendem Fahrzeugrad nach unten wirkenden Reibungskräfte, welche durch die Rotation des schiebenden Fahrzeugrades hervorgerufen werden, zu kompensieren, umfaßt das Anschlagselement vorteilhafterweise eine Andruckrolle. Die Rotationsachse der Druckrolle verläuft parallel zu einer Achse um die das Anschlagselement insgesamt aus dem Gehäuse ausgeklappt werden kann und ist parallel zu der Oberkante der öffnungsseitigen Gehäuseschmalseite orientiert. Des weiteren umfaßt das Anschlagselement zwei seitlich neben der Anschlagsrolle angeordnete Führungszungen, welche im ausgeklappten Zustand des Anschlagselements in Richtung des anliegenden Fahrzeugreifens weisen. Die Führungszungen sollen ein problemloses Eingreifen des Fahrzeugreifens in die erfindungsgemäße Vorrichtung erleichtern.

Die Vorrichtung umfaßt ferner eine Gleitschutzkette, insbesondere eine Seitenführungskette mit einem Schloßunterteil, welches an ihrem ersten Ende - und einem Schloßoberteil, welches an ihrem zweiten Ende vorgesehen ist. Die Kette ist axial zusammengerafft zwischen axial angeordneten Reibelementen im Gehäuse aufgenommen. Die Reibelemente sorgen für einen gleichmäßigen Gegenzug beim Herausziehen der Kette. Sie sind beispielsweise in Form von Borsenbüscheln, Moosgummistreifen o.ä. ausgebildet.

Das am ersten Kettenende vorgesehene Schloßunterteil ist im wesentlichen aus einem U-ähnlichen Profil gebildet, dessen Profilboden wenigstens zwei quer zur Profilachse angeordnete Doppellaschen sowie zwei hakenartige Elemente zur Befestigung der Kette und zwei weitere Befestigungselemente zur drehbaren Aufnahme eines Auffahrbügels umfaßt. Der Auffahrbügel weist eine C-förmige Gestalt auf und ist im Stegbereich am Schloßunterteil angelenkt. Der Auffahrbügel umfaßt ferner Anschlagselemente, welche in unmittelbarer Nachbarschaft an den Flanken des Schloßunterteils angeordnet sind und mit hier vorgesehenen Haltezungen derart zusammenwirken, daß der Auffahrbügel in seiner Drehbarkeit gegenüber dem Schloßunterteil begrenzt ist.

Das Schloßunterteil umfaßt ferner an der Oberkante seiner Seitenstege einstückig angeformte Verschleißflächen, welche vorzugsweise unterbrochen ausgebildet sind. Die abschnittsweise Ausbildung der Verschleißflächen trägt zu einer geringeren Lärmentwicklung beim Fahren mit aufgezogenen Gleitschutzketten bei.

Das am zweiten Ende der Gleitschutzkette angeordnete Schloßoberteil umfaßt eine Grundplatte mit zwei seitlich angeformten Stegen, welche durch ein quer dazu verlaufendes U-Profil begrenzt sind. Der das U-Profil nach außen hin begrenzende Steg umfaßt zwei rechtwinklig abgesetzte, nach außen weisende Rastnasen, welche vorzugsweise nach außen hin spitz oder gerundet ausgebildet sind. Die Rastnasen sind derart dimensioniert, daß sie in die Doppellaschen des Schloßunterteils eingreifen und eine sichere Verriegelung der beiden Schloßkomponenten ermöglichen. Ferner umfaßt das Schloßoberteil eine schräg von der Grundplatte wegweisende Haltezunge, welche vorzugsweise gerundet ausgebildet ist.

Mittels zweier seitlich angeformter hakenartiger Befestigungselemente kann das Schloßoberteil in entsprechende Kettenelemente der Gleitschutzkette eingehängt werden. Ferner umfaßt das Schloßoberteil in ähnlicher Weise wie das Schloßunterteil einstückig angeformte Verschleißflächen, welche vorteilhafterweise an der den Stegen gegenüberliegenden Außenseite der Grundplatte vorgesehen sind.

In einer vorteilhaften Ausführungsform kann als Gleitschutzkette eine Seitenführungskette vorgesehen sein.

Nachfolgend wird ein bevorzugtes Ausführungsbeispiel der Erfindung anhand der Zeichnungen beschrieben. Darin zeigen in rein schematischer Darstellung:
- Fig. 1: eine perspektivische Ansicht der erfindungsgemäßen Vorrichtung, wobei die Gleitschutzkette entnommen ist;
- Fig. 2: die Anordnung der zum Aufziehen der Kette vorbereiteten erfindungsgemäßen Vorrichtung im Bereich eines Fahrzeugrades;
- Fig. 3: die Anordnung der Vorrichtung während des Aufziehvorganges der Gleitschutzkette;
- Fig.4a: eine Frontansicht des Schloßunterteils mit Auffahrbügel;
- Fig.4b: eine Seitenansicht des Schloßunterteils mit Auffahrbügel;
- Fig.5a: eine Draufsicht auf das Schloßoberteil, und
- Fig.5b: eine Seitenansicht des Schloßoberteils.

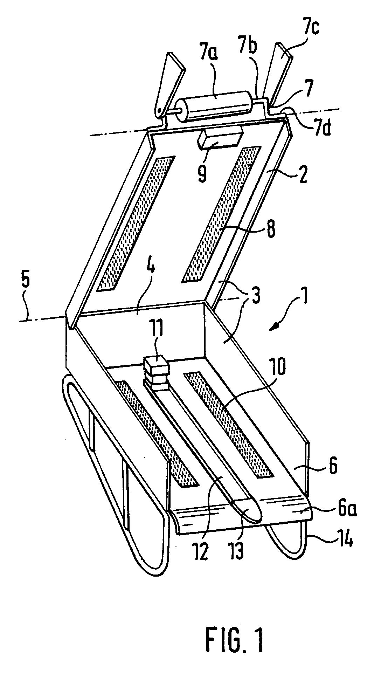

Fig. 1 zeigt in perspektivischer Ansicht die erfindungsgemäße Vorrichtung, hier allgemein mit 1 bezeichnet, wobei der Deckel 2 des Gehäuses 3 nach oben geklappt ist. Die Achse 5 um welche der Gehäusedeckel nach oben geschwenkt werden kann, verläuft parallel zu einer zweiten Gehäuseschmalseite 4. Parallel zur Oberkante einer ersten Gehäuseschmalseite 6 verläuft eine Drehachse, um welche das Anschlagselement 7 aus dem Gehäusedeckel ausgeklappt werden kann. Wie der Zeichnung zu entnehmen ist, umfaßt das Anschlagselement 7 eine Andruckrolle 7a, welche auf einer Achse 7b aufgenommen ist, sowie seitlich der Andruckrolle angeordnete Führungszungen 7c. Zum Herausklappen des Anschlagselements können insbesondere zwei Scharniere 7d vorgesehen sein. Ferner sind an der Innenseite des Gehäusedeckels parallel zur Längsseite des Gehäuse verlaufende Borstenelemente 8 sowie ein Aufnahmeelement 9 vorgesehen. Das Aufnahmeelement 9 dient als Halterung zur Lagefixierung des Auffahrbügels während der Anfangsphase des selbsttätigen Aufziehens der Gleitschutzkette. Die Gleitschutzkette selbst befindet sich (hier nicht dargestellt) axial zusammengerafft zwischen den Borstenelementen 8 und den auf dem inneren Gehäuseboden, gegenüberliegend angebrachten Borstenelementen 10. Beim Herausziehen der Kette wird diese durch die Reibung an den Borstenelementen 8, 10 auf gleichmäßigem Gegenzug gehalten. Das Schloßoberteil 35 der Kette ist in einem Gleitbock 11 aufgenommen, welcher entlang einer Führungsschiene 12 beweglich angeordnet ist.

Der Gehäuseboden ist im Bereich der Kettenauszugsöffnung 6a nach vorne gezogen und leicht nach unten gebogen, was insgesamt den Ausziehvorgang der Kette unterstützt. Ferner befindet sich in diesem Bereich mittig ein flexibles Führungselement 13, welches fest mit dem Gehäuse 3 verbunden ist und insbesondere dazu dient, das Schloßoberteil 35 in Eingriff mit dem Schloßunterteil 20 zu bringen. Schließlich können in dieser Darstellung die an der Gehäuseunterseite angeordneten, schräg zur Gehäuselängsseite verlaufenden Gleitkufen 14 entnommen werden.

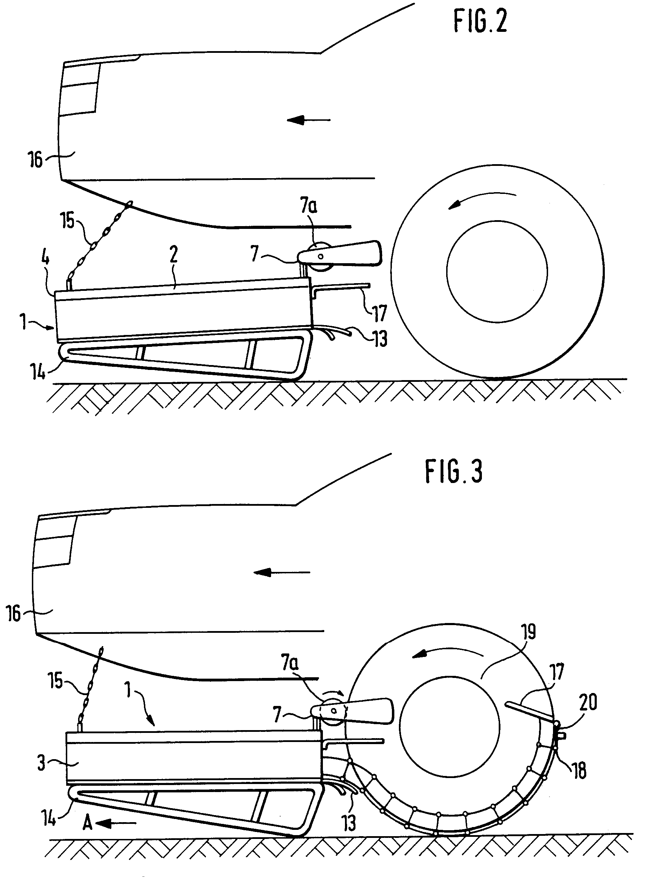

Fig. 2 zeigt die Anordnung der Vorrichtung unmittelbar vor Beginn des selbsttätigen Aufziehens des Gleitschutzelements. Wie dieser Darstellung entnommen werden kann ist das Gehäuse 1 deckelseitig, in der Nähe der zweiten Gehäuseschmalseite 4 mittels eines beweglichen Befestigungselements 15, beispielsweise einer Kette an der Unterseite eines Fahrzeuges 16 aufgehängt, so daß die Gleitkufen 14 im rückwärtigen Bereich der Vorrichtung leicht vom Boden abgehoben sind. Oberhalb der Kettenauszugsöffnung 6a ist ferner das ausgeklappte Anschlagselement 7 mit der Andruckrolle 7a erkennbar. Unterhalb des Anschlagselements ist der Auffahrbügel 17 in eine in dieser Darstellung nicht erkennbaren Halterung 9 aufgenommen. Beim Zurücksetzen des Fahrzeuges rollt das Fahrzeugrad in den Bereich der Führungszungen, bis es schließlich an der Andruckrolle 7a anliegt. Gleichzeitig schiebt sich der Auffahrbügel 17 mit seinen beiden seitlichen Armen über die Reifenwand.

Fig. 3 zeigt den weiteren Verlauf des Aufziehvorgangs. Der auf dem Reifen reibschlüssig aufgenommene Auffahrbügel 17 schleppt beim weiteren Verfahren des Fahrzeuges die Gleitschutzkette 18 aus dem Gehäuse 3 der Vorrichtung heraus, wobei sich die Kette gleichmäßig über Reifen legt. Gleichzeitig befindet sich das Fahrzeugrad 19 in Anschlag mit der Andruckrolle 7a, so daß die Vorrichtung 1 in Richtung des Pfeiles A verschoben wird.

Nach einer Radumdrehung (hier nicht dargestellt) wird schließlich das Schloßoberteil 35 aus seiner Halterung herausgezogen und in Zusammenwirken mit der Führungszunge 13 mit dem Schloßunterteil 20, welches unmittelbar am Auffahrbügel 17 angeordnet ist, in Eingriff gebracht.

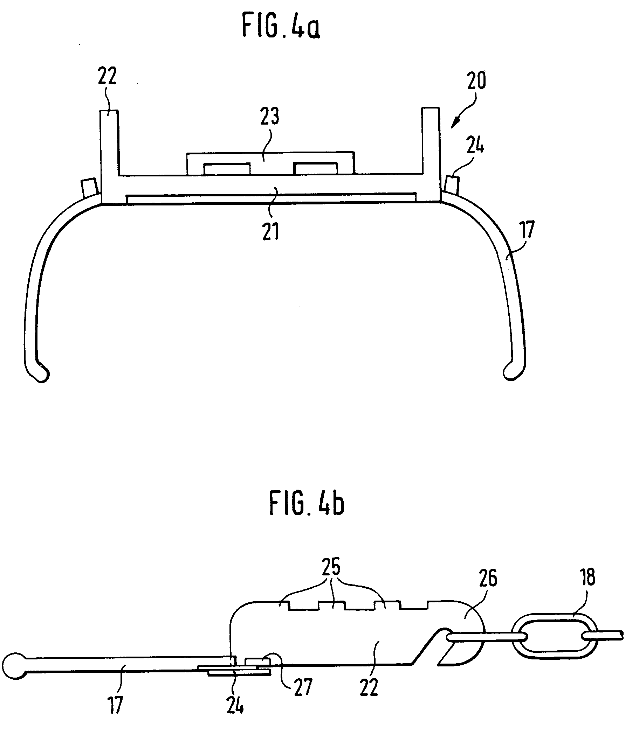

Das Schloßunterteil ist in groben Zügen durch die Figuren 4a und 4b beschrieben. Die Fig. 4a zeigt eine Fronansicht des Schloßunterteils 20, welches im wesentlichen ein U-förmiges Profil mit einem Profilboden 21 sowie zwei seitlichen Stegen 22 umfaßt. Im Bereich des Profilbodens ist quer zur Profilachse die Doppellasche 23 angeordnet. In einer bevorzugten Ausgestaltungsform können mehere, parallel angerdnete Doppellaschen 23 vorgesehen sein, um auch bei leicht unterschiedlichen Reifenumfängen einen straffen Sitz der Kette zu gewährleisten. Ferner ist an der Außenkante des Profilbodens der Auffahrbügel 17 drehbar aufgenommen, wobei die Drehbarkeit des Auffahrbügels 17 durch Anschlagszungen 24, welche mit seitlichen Ansätzen 27 (siehe Fig. 4b) an der Außenseite des Schloßunterteils 20 zusammenwirken, begrenzt wird.

Fig. 4b zeigt eine Seitenansicht des Schloßunterteils 20, wobei insbesondere die Ausbildung der Seitenstege 22 deutlich wird. Diese weisen an ihrer Oberkante mehrere einstückig angeformte Verschleißflächen 25 auf. Ferner ist an der gegenüberliegenden Seite des Auffahrbügels ein hakenartiges Befestigungselement 26 vorgesehen, welches zum Einhängen der Gleitschutzkette 18 dient. Auch werden in dieser Ansicht die mit den Anschlagszungen 24 zusammenwirkenden seitlichen Ansätze 27 deutlich.

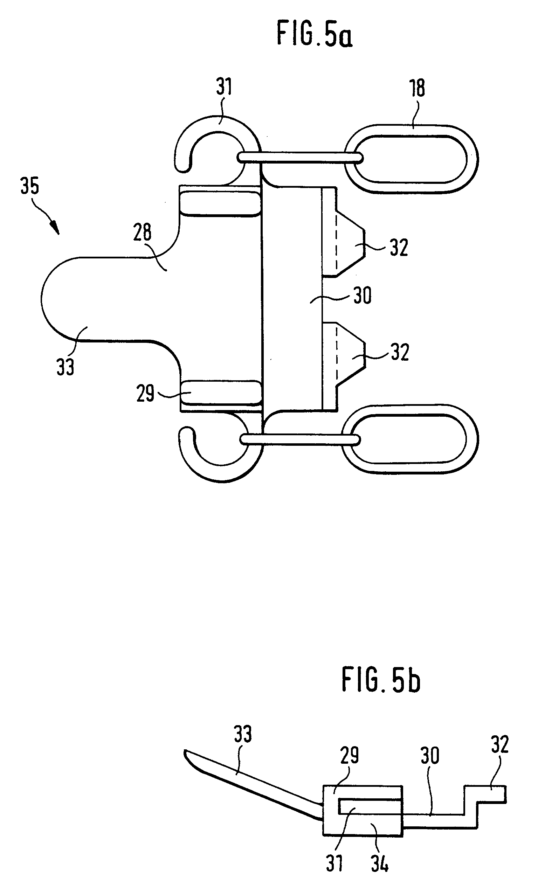

Fig. 5a zeigt eine Draufsicht auf das Schloßoberteil 35. Dieses umfaßt eine Grundplatte 28 mit zwei seitlich angeformten Stegen 29 und ein quer zur Ausrichtung der Stege 29 verlaufendes U-Profil 30. Ferner sind seitlich der Stege Befestigungshaken 31 zur Befestigung der Gleitschutzkette 18 vorgesehen. Das U-Profil 30 umfaßt an seinem äußeren Steg zwei rechtwinklig angesetzte, im wesentlichen dreiecksförmige Rastnasen 32. An der Grundplatte 28 ist ferner die Führungszunge 33 angeordnet.

Fig. 5b zeigt das Schloßoberteil 35 in Seitenansicht. Hierbei wird deutlich, daß die Führungszunge 33, welche in Draufsicht gerundet ausgebildet ist, schräg nach oben verlaufend angeordnet ist. Ferner wird die Anordnung der Rastnasen, welche rechtwinklig am äußeren Steg des U-Profils 30 vorgesehen sind, deutlich. An der Unterseite der Grundplatte 28, unterhalb der zweiten Stege 29 sind auch hier Verschleißflächen 34 vorgesehen.

## Patentansprüche

1. Verfahren zum selbsttätigen Aufziehen eines Gleitschutzelements, insbesondere einer Gleitschutzkette auf einen Fahrzeugreifen, wobei ein Auffahrbügel auf die Seitenflanken des Reifens gedrückt wird, das Fahrzeug (16) verfahren wird, der Auffahrbügel (17) aus seiner gehäuseseitigen Halterung gelöst wird, so daß der Auffahrbügel (17) in Verbindung mit einem Schloßunterteil (20) die Kette aus dem Gehäuse (3) herauszieht, wobei die Kette durch Reibglieder unter einer Vorspannung gehalten wird,
dadurch gekennzeichnet,
daß das Gehäuse (3) außerhalb des Fahrzeuges (16) im Bereich eines Fahrzeugrades angeordnet wird, daß das Fahrzeug (16) derart verfahren wird, daß es mit dem Gehäuse (3) in Anschlag steht, daß das Gehäuse durch ein weiteres Verfahren des Fahrzeuges unter gleichzeitigem Aufziehen der Kette (18) verschoben wird, und daß nach einer Umdrehung des Rades ein, in einer gehäuseseitig angeordneten Halterung aufgenommenes und am Kettenende angeordnetes Schloßoberteil (35) aus der Halterung (11) gezogen, und durch ein Führungselement (13) in Verschlußstellung mit dem Schloßunterteil (20) gebracht wird.

2. Verfahren nach Anspruch 1,
dadurch gekennzeichnet,
daß das Gehäuse (2) und mit dem Fahrzeug (16) beweglich verbunden wird, so daß es teilweise hängend am Fahrzeug (16) angeordnet ist.

3. Verfahren nach Anspruch 1 oder 2,
dadurch gekennzeichnet,
daß die Vorrichtung (1) beim Heranfahren des Fahrzeugs (16) durch Führungszungen (7c) in Anschlag mit einem Fahrzeugrad geführt wird und die Bewegung des Rades am Anschlag durch eine Andrückrolle (7a) aufgenommen wird.

4. Verfahren nach einem der vorhergehenden Ansprüche,
dadurch gekennzeichnet,
daß das Gehäuse (3) unter der bremsenden Einwirkung von Reibungskräften verschoben wird.

5. Verfahren nach Anspruch 1,
dadurch gekennzeichnet,
daß die Halterung, in der das Schloßoberteil (35) aufgenommen ist, beim Aufziehen des Gleitschutzelements (18) auf einem linear bewegichen Gleitbock (11) entlang der Gehäuseachse bewegt wird.

6. Verfahren nach Anspruch 1,
dadurch gekennzeichnet,
daß das Schloßoberteil (35) beim Anschlag des Gleitbocks (11) am öffnungsseitigen Ende der Führungsschiene (12) aus der Halterung gezogen und in Zusammenwirken mit einem Führungselement (13) mit dem Schloßunterteil (20) in Eingriff gebracht wird.

7. Verfahren nach einem der vorhergenden Ansprüche,
dadurch gekennzeichnet,
daß der Auffahrbügel (17) nach dem Aufziehen der Gleitschutzkette (18) in ein tangentiale Position verstellt und durch wenigstens eine Anschlagszunge (24) gehalten wird.

8. Vorrichtung zum selbstständigen Aufziehen eines Gleitschutzelements, insbesondere einer Gleitschutzkette auf ein Fahrzeugrad, mit einem Gehäuse (3) zur Aufnahme der Kette, einer an einer ersten Stirnseite angeordneten Kettenauszugsöffnung (6a) zum Ausfahren der Gleitschutzkette (18), einem am vorderen Kettenende angeordneten Auffahrbügel (17) zur Befestigung am Fahrzeugrad und einem Schloß zur Befestigung der auf das Fahrzeugrad aufgezogenen Kette, insbesondere zur Durchführung des Verfahrens nach Anspruch 1,
dadurch gekennzeichnet,
daß an der Gehäuseaußenseite Stütz- und Halteelemente vorgesehen sind, daß das Gehäuse ein ausklappbares Anschlagselement (7) umfaßt, daß im Bereich der Kettenauszugsöffnung (6a) ein mit dem Gehäuse fest verbundenes Führungselement (13) vorgesehen ist, welches ein Schloßoberteil (35) nach Ausziehen der Gleitschutzkette (18) aus dem Gehäuse (3) in ein Schloßunterteil (20) führt und mit diesem verrastet.

9. Vorrichtung nach Anspruch 8,
dadurch gekennzeichnet,
daß das Gehäuse (3) durch einen Kasten mit Deckel (2) und im wesentlichen rechteckförmigem Querschnitt gebildet ist, wobei der Deckel (2) um eine Achse parallel zu einer zweiten schmalen Stirnseite (4) aufklappbar ist.

10. Vorrichtung nach Anspruch 8 oder 9,
dadurch gekennzeichnet,
daß zum Verschluß der Kettenauszugsöffnung (6a) eine aufsteckbare Kappe vorgesehen ist, welche vorzugsweise aus Kunststoff gebildet ist.

11. Vorrichtung nach Anspruch 8,
dadurch gekennzeichnet,
daß die Stützelemente ein- und ausklappbar sind und im ein- bzw. ausgeklappten Zustand verrastbar sind.

12. Vorrichtung nach Anspruch 11,
dadurch gekennzeichnet,
daß wenigstens zwei Stützelemente vorgesehen sind, welche in Form von geneigten Gleitkufen (14) ausgebildet und im Bereich der bodenseitigen Gehäuselängskante angeordnet sind, so daß das Gehäuse (3) bei ausgeklappten Gleitkufen (14) mit seiner Kettenauszugsöffnung (6a) schräg nach oben steht.

13. Vorrichtung nach Anspruch 11 oder 12,
dadurch gekennzeichnet,
daß die Stützelemente durch reibungsgebremste Rollen gebildet sind.

14. Vorrichtung nach Anspruch 8,
dadurch gekennzeichnet,
daß die Halteelemente vorzugsweise in Form einer Befestigungskette (15) ausgebildet sind, welche im Bereich der zweiten Stirnseite (4) , vorzugsweise an das Gehäuse (3) seitlich nach außen überragenden, Endabschnitten einer vorgesehenen Achse (7b) des Gehäusedeckels (2) angebracht ist.

15. Vorrichtung nach Anspruch 8,
dadurch gekennzeichnet,
daß das Anschlagselement (7) um eine Achse parallel zur Oberkante der ersten schmalen Stirnseite (6) ausklappbar ist.

16. Vorrichtung nach Anspruch 15,
dadurch gekennzeichnet,
daß das Anschlagselement (7) eine parallel zu seiner gehäuseseitigen Drehachse angeordnete Andruckrolle (7a) und zwei seitlich der Andruckrolle angeordnete Führungszungen (7c) umfaßt.

17. Vorrichtung nach Anspruch 8,
dadurch gekennzeichnet,
daß das Schloßunterteil (20) aus einem U-Profil gebildet ist, dessen Profilboden (21) mindestens eine quer zur Profilachsel angeordnete Doppellasche (23), sowie zwei hakenartige Elemente (26) zur Befestigung der Kette (18) und zwei weitere Befesitgungselemente zur drehbaren Aufnahme des Auffahrbügels (17) umfaßt.

18. Vorrichtung nach Anspruch 17,
dadurch gekennzeichnet,
daß die Befestigungselemente zur Aufnahme des Auffahrbügels (17) seitliche Ansätze (27) mit einen Anschlag für entsprechende, am Auffahrbügel angeordnete Haltezungen (24) unfassen.

19. Vorrichtung nach Anspruch 17 oder 18,
dadurch gekennzeichnet,
daß die Seitenstege (22) an Ihren Oberkante einstückig angeformte Verschleißflächen (25) aufweisen.

20. Vorrichtung nach Anspruch 8,
dadurch gekennzeichnet,
daß das Schloßoberteil (35) eine Grundplatte (28) mit zwei seitlich angeformten Stegen (29), welche durch ein quer dazu verlaufendes U-Profil (30) begrenzt sind, wobei das U-Profil (30) zwei rechtwinklig abgesetze, nach außen weisende, gerundete, vorzugsweise dreiecksförmig ausgebildete Rastnasen (32) aufweist, die in eine der Doppellaschen (23) des Schloßunterteils (20) eingreifen, sowie eine schräg von der Grundplatte (28) wegweisende Führungszunge (33) umfaßt.

21. Vorrichtung nach Anspruch 20,
dadurch gekennzeichnet,
daß das Schloßoberteil (35) zwei seitlich angeformte hakenartige Befestigungselemente (31) zum Einhängen der Kette (18) sowie zwei lösbare Verriegelungs- oder Verschlußelemente umfaßt.

22. Vorrichtung nach Anspruch 20 oder 21,
dadurch gekennzeichnet,
daß an der den Stegen (28) gegenüberliegenden Oberseite der Grundplatte (28) wenigstens zwei einstückig angeformte Verschleißflächen (34) vorgesehen sind.

23. Vorrichtung nach Anspruch 8,
dadurch gekennzeichnet,
daß die Gleitschutzkette (18) vorzugsweise durch eine Seitenführungskette gebildet ist.
